# EUROPÄISCHE PATENTSCHRIFT

(11) **EP 2 168 129 B1**
(45) Veröffentlichungstag und Bekanntmachung des Hinweises auf die Patenterteilung: **24.07.2013**
(21) Anmeldenummer: 09723232.6
(22) Anmeldetag: 09.03.2009
(51) Int. Cl.: E04G 23/02, G21C 19/02, G21C 19/20, G21C 19/07

(54) **VORRICHTUNG ZUR REPARATUR EINER SCHADSTELLE IN EINEM UNTER WASSER BEFINDLICHEN WANDBEREICH EINES BEHÄLTERS ODER BECKENS**
DEVICE FOR REPAIRING A DAMAGED LOCATION IN AN UNDERWATER REGION OF A WALL OF A VESSEL OR POOL
DISPOSITIF POUR LA RÉPARATION D' UN EMPLACEMENT ENDOMMAGÉ DANS LA PARTIE DE LA PAROI D' UNE CUVE OU D' UN RÉCIPIENT SE TROUVANT SOUS L' EAU

(30) Priorität: 15.03.2008 DE 102008014544
(43) Veröffentlichungstag der Anmeldung: 31.03.2010
(73) Patentinhaber: AREVA GmbH, 91052 Erlangen (DE)
(72) Erfinder: KRÄMER, Georg, 91346 Wiesenttal (DE); MEIER-HYNEK, Konrad, 91074 Herzogenaurach (DE)
(74) Vertreter: Meissner, Bolte & Partner
(86) Internationale Anmeldenummer: PCT/EP2009/052715
(87) Internationale Veröffentlichungsnummer: WO 2009/115419

(56) Entgegenhaltungen:
- DE-A1- 3 913 202
- DE-A1- 3 916 186
- JP-A- 2003 156 586
- US-B1- 6 555 779

## Beschreibung

Vorrichtung zur Reparatur einer Schadstelle in einem unter Wasser befindlichen Wandbereich eines Behälters oder Beckens.

Die Erfindung bezieht sich auf eine Vorrichtung zur Reparatur einer Schadstelle in einem unter Wasser befindlichen Wandbereich eines Behälters oder Beckens, insbesondere im Wandbereich eines Beckens einer Kernreaktoranlage.

Die Wandflächen (Seitenwände und Bodenfläche) von mit Wasser gefluteten Becken einer Kernreaktoranlage, beispielsweise die Reaktorgrube oder das Brennelementlagerbecken, sind mit einem Liner aus miteinander verschweißten Stahlplatten versehen. Die Schweißnähte, mit denen die Stahlplatten untereinander oder mit einer Unterkonstruktion verschweißt sind, sind durch beim Verschweißen unvermeidbar entstehende mechanische Spannungen anfällig für chlorinduzierte Spannungsrisskorrosion. Um das Austreten von Beckenwasser durch derartige Risse in die Betonwand zu vermeiden, müssen diese abgedichtet werden. Um während einer solchen Reparaturmaßnahme eine ausreichende Abschirmung des Wartungspersonals gegen radioaktive Strahlung sicherzustellen, kann insbesondere im mit Brennelementen beladenen Brennelementlagerbecken das Wasser nicht abgelassen werden, so dass die Reparatur unter Wasser erfolgen muss. In einem solchen Brennelementlagerbecken sind jedoch insbesondere die seitlichen Wandbereiche schwer zugänglich, da zwischen dem im Brennelementlagerbecken befindlichen Brennelementlagergestell und den Seitenwänden nur ein schmaler Spalt zur Verfügung steht.

Grundsätzlich ist es beispielsweise aus der DE 100 26 649 bekannt, derartige Risse durch Aufbringen eines Klebstoffes oder durch Aufkleben von Reparaturauflagen zu verschließen. Hierzu wurde die Reparaturauflage entweder von einem Taucher manuell oder mit Hilfe eines vom Beckenrand aus bedienten Gestänges an der Wand angebracht. Eine Reparatur von schwer zugänglichen, in großer Tiefe unterhalb des Wasserspiegels liegenden Schadstellen ist auf diese Weise jedoch nicht möglich.

Aus der DE 39 13 202 A1 ist eine fernbedienbare Einrichtung zum Anbringen einer Reparaturauflage an einer Behälterwand bekannt, bei der mit Hilfe eines Manipulators im Bereich der Schadstelle ein Gestell fixiert wird, in dem ein mit einer Reparaturauflage versehener Stempel gelagert ist, der gegen die Behälterwand angestellt werden kann. Aus der DE 39 16 186 A1 ist eine Vorrichtung zum Entfernen einer Schicht, beispielsweise einer vorher aufgebrachten Reparaturauflage bekannt, bei der ebenfalls ein Gestell an der Behälterwand fixiert wird, in der ein Führungselement mit einem Wagen angeordnet ist, welcher parallel zur Behälterwand innerhalb des Gestells verfahrbar ist und ein an die Behälterwand anlegbares Werkzeug zum Ablösen der Schicht trägt.

Aus der DE 39 16 186 A1 und aus der US 6,555,779 B1 sind jeweils Reparatur- oder Bearbeitungsverfahren bekannt, bei denen ein Werkzeug, beispielsweise eine Fräseinrichtung bzw. ein Schweißkopf entlang einer parallel zur Behälterwand angeordneten Schiene verfahrbar angeordnet sind, um einen zur Bearbeitung erforderlichen Vorschub des Werkzeuges zu ermöglichen. Der Erfindung liegt daher die Aufgabe zu Grunde, eine Vorrichtung zur Reparatur einer Schadstelle in einem unter Wasser befindlichen Wandbereich eines Behälters oder Beckens, insbesondere im Wandbereich eines Beckens einer Kernreaktoranlage anzugeben, mit der es möglich ist, auch schwer zugängliche Stellen zu reparieren.
Die genannte Aufgabe wird gemäß der Erfindung gelöst mit einer Vorrichtung mit den Merkmalen des Patentanspruches 1. Gemäß diesen Merkmalen enthält die Vorrichtung ein entlang einer Seitenwand beabstandet von dieser anbringbares und an dieser fixierbares Führungssystem zum Führen eines in eine Längsrichtung des Führungssystems verfahrbaren Schlittens, an dem eine quer zu dieser Längsrichtung verschiebbar gelagerte Aufnahme für eine an den die Schadstelle enthaltenden Wandbereich mit einer Klebefläche anlegbare Reparaturauflage angeordnet ist.

Mit einer derartigen Vorrichtung ist es möglich, seitliche Wandbereiche sowie an die seitlichen Wandbereiche angrenzende Randbereiche der Bodenfläche zu erreichen, die durch innerhalb des Beckens befindliche Einbauteile, beispielsweise die Brennelementlagergestelle eines Brennelementlagerbeckens, nur über einen schmalen Spalt zugänglich sind.

Durch die Verwendung eines auf das an der Seitenwand fixierte Führungssystem aufgleisbaren und in Längsrichtung der Führungsschiene verfahrbaren Schlittens zum Transport der Reparaturauflage zur Schadstelle ist es möglich, eine mit einem viskosen fließfähigen Klebstoff versehene Reparaturauflage in sehr kurzer Zeit in die richtige Arbeitsposition zu bringen, da diese vorher durch die Anbringung der Führungsschiene festgelegt worden ist. Mit anderen Worten: Das Anbringen und Positionieren der Führungsschiene kann mit hoher Präzision und ohne Zeitdruck erfolgen, da die mit dem Klebstoff versehene Reparaturauflage erst dann an die beschädigte Stelle transportiert wird, wenn die Führungsschiene installiert worden ist.

Wenn der Schlitten antriebslos ist und ausschließlich durch Wirkung der Schwerkraft in eine Endposition verfahrbar ist, ist der Aufbau der Vorrichtung wesentlich vereinfacht.

Die Montage des Führungssystems ist vor Ort erleichtert, wenn dieses aus lösbar miteinander verbundenen Abschnitten zusammengesetzt ist.

Vorzugsweise ist das Führungssystem aus zwei zueinander parallelen Führungsschienen aufgebaut. Dadurch können die beim Anpressen der Reparaturauflage über den Schlitten auf das Führungssystem wirkenden Kräfte und Drehmomente besser aufgenommen werden.

Eine besonders einfache Befestigung des Führungssystems an der Seitenwand ist möglich, wenn an diesem an eine Saugleitung angeschlossene Saugnäpfe angeordnet sind.

Die Positionierung der Führungsschienen in engen Spalten wird erleichtert, wenn zumindest ein Saugnapf quer zur Längsrichtung des Führungssystems verschiebbar an diesem gelagert ist.

Der sichere Transport der Reparaturauflage an die Reparaturstelle wird ermöglicht, wenn diese in der Aufnahme durch Erzeugen eines Unterdrucks auf eine der Klebefläche angewandten Rückseite fixierbar ist. Durch diese Maßnahme ist auch ein einfaches Auslösen oder Freigeben der Reparaturauflage möglich, wenn diese nach Aushärten des Klebstoffes an der Wand dauerhaft fixiert ist.

Hohe Anpresskräfte für eine sichere Klebverbindung werden insbesondere dann erzielt, wenn die Aufnahme pneumatisch verschiebbar ist.

In einer besonders vorteilhaften Ausgestaltung der Erfindung umfasst die Vorrichtung einen die Aufnahme umgebenden und in Vorschubrichtung der Aufnahme verschiebbar mit einer Vorspannung relativ zu dieser gelagerten Rahmen mit einer sich in den vom Rahmen umgebenen Innenraum erstreckenden Lippe, deren Innenrand mit dem Außenrand der Reparaturauflage in Vorschubrichtung fluchtet und in einer Ausgangsposition über die Reparaturauflage vorsteht. Durch diese Maßnahme wird verhindert, dass der beim Anpressen der Reparaturauflage an den zu reparierenden Wandbereich seitlich hervorquellende Klebstoff sich außerhalb der Reparaturauflage auf der Wand ausbreitet oder abtropft.

Wenn sich außerdem zwischen dem Rahmen und der Aufnahme ein diese umgebender Auffangraum befindet, wird der durch die Lippe abgestreifte Klebstoff sicher aufgenommen und gelangt nicht in das Innere des Beckens.

Die Lippe besteht vorzugsweise aus einem Federblech, so dass diese möglichst gleichmäßig und dicht an der Wand anliegt.

Zur weiteren Erläuterung der Erfindung wird auf die Ausführungsbeispiele der Zeichnung verwiesen. Es zeigen:
- Figur 1: eine Vorrichtung gemäß der Erfindung in Arbeitsposition in einem Brennelementlagerbecken in einer schematischen Seitenansicht,
- Figur 2: eine Draufsicht auf die Vorrichtung ebenfalls in einer schematischen Darstellung,
- Figur 3: eine perspektivische Darstellung des unteren Teils der Vorrichtung mit einem in Endposition befindlichen, eine Reparaturauflagen aufnehmenden Schlitten,
- Figur 4: einen Querschnitt durch den Schlitten mit darauf befindlicher Reparaturauflage,
- Figur 5: eine alternative Ausführungsform einer Vorrichtung gemäß der Erfindung, die für die Reparatur im Bereich einer Innenkante geeignet ist.

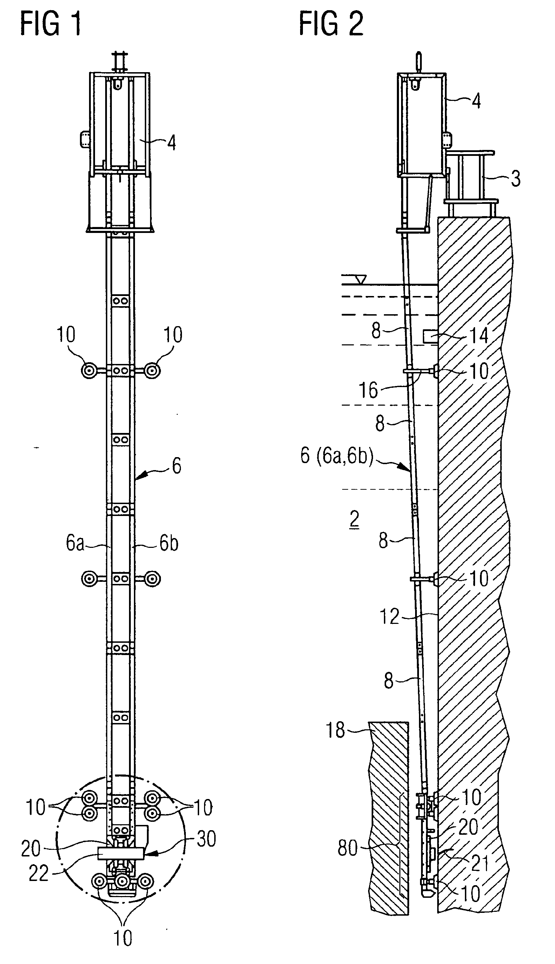

Figur 1 zeigt eine Vorrichtung gemäß der Erfindung in Arbeitsposition in einem mit Wasser gefluteten Brennelementlagerbecken 2 einer Kernreaktoranlage. Die Vorrichtung umfasst einen in einem am Beckenrand abgestellten Gestell 3 gehaltenen Tragrahmen 4 für ein sich in eine Längsrichtung erstreckendes, aus zwei zueinander parallelen Führungsschienen 6a,b aufgebautes Führungssystem 6, das jeweils aus einer Mehrzahl von Abschnitten 8 zusammengesetzt ist. Am Führungssystem 6 bzw. an den Führungsschienen 6a,b ist eine Mehrzahl von Saugnäpfen 10 angeordnet, die über eine in der Figur nicht dargestellte Saugleitung mit Unterdruck beaufschlagt werden können und auf diese Weise das Führungssystem 6 an einer im Beispiel vertikal verlaufenden Seitenwand 12 beabstandet von dieser fixieren.

Im Ausführungsbeispiel verläuft das Führungssystem 6 in einem oberen Bereich geradlinig und schräg zur Seitenwand 12, um auf diese Weise im oberen Bereich des Brennelementlagerbeckens 2 befindliche und in der Figur schematisch veranschaulichte Einbauten 14 zu überbrücken. Dieser schräg verlaufenden Bereich geht am freien Ende des Führungssystems 6 in einen parallel zur Wandfläche 12 verlaufenden Endabschnitt 80 über, der mit dem benachbarten Abschnitt 8 mit einem begrenzten Spiel gelenkig verbunden ist.

Die Saugnäpfe 10 sind jeweils paarweise am freien Ende der Schenkel von die Führungsschienen 6a,b umgreifenden U-förmigen Haltebügeln 16 angeordnet, wobei die Länge der Schenkel entsprechend der erforderlichen Neigung mit zunehmenden Abstand vom Tragrahmen 4 abnimmt.

Das freie Ende des Führungssystems 6 ist in einen Spalt zwischen der Seitenwand 12 und einem schematisch veranschaulichten Brennelementlagergestell 18 eingeführt und an der Wand ebenfalls über eine Mehrzahl von Saugnäpfen 10 fixiert. Figur 1 zeigt nun eine Situation, in der sich ein auf die Führungsschienen 6a,b des Führungssystems 6 aufgegleister und eine mit einer Klebefläche versehene Reparaturauflage tragender Schlitten 20 in Arbeitsposition an einer Schadstelle 21 der Seitenwand 12 befindet. Diese Arbeitsposition ist durch die Lage von Endanschlägen für den Schlitten 20 am Führungssystem 6 festgelegt. Die Schadstelle 21 und deren genaue Position wurde in einer vorhergehenden Prüfung aufgefunden und vermessen, so dass eine genaue Positionierung des Führungssystems 6 - Position am Beckenrand und Tiefenlage des - möglich ist. Der Schlitten 20 ist antriebslos und wird in die Arbeitsposition mit einer am Tragrahmen 4 befindlichen Seilwinde in seine Endposition ausschließlich durch Wirkung der Schwerkraft hinabgelassen.

In der Draufsicht gemäß Figur 2 ist zu erkennen, dass die Saugnäpfe 10 zu beiden Seiten der Führungsschienen 6a,b beabstandet zu diesen angeordnet sind, um zwischen ihnen ein Vorbeifahren des Schlittens 20 zu ermöglichen. Der Figur ist außerdem zu entnehmen, dass die Anzahl der Saugnäpfe 10 im Bereich des freien Endes des Führungssystems 6 erhöht ist, um die beim Anpressen der vom Schlitten 20 transportierten Reparaturauflage 22 entstehenden Gegenkräfte aufzunehmen und sicherzustellen, dass das Führungssystem 6 in fixierter Lage an der Seitenwand 12 verbleibt.

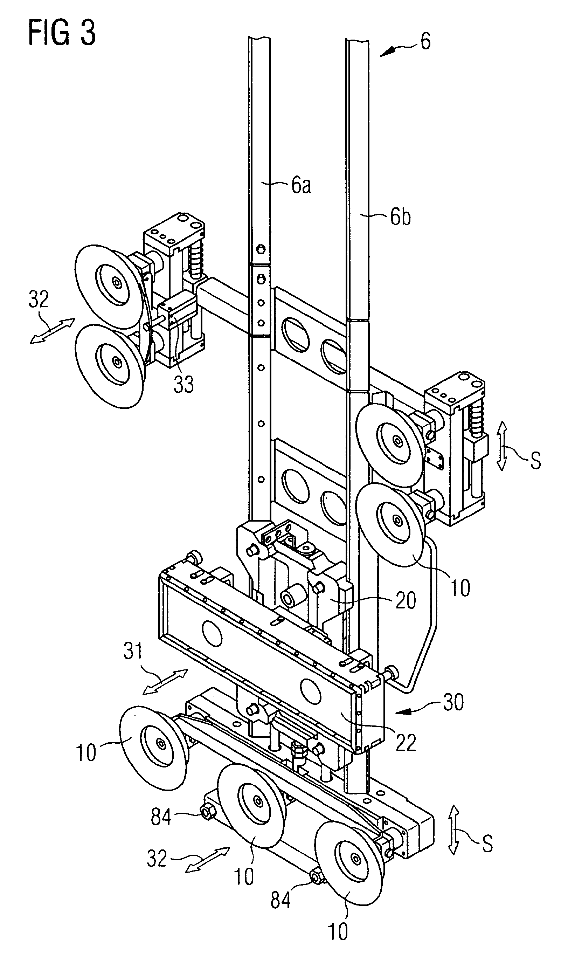

Der vergrößerten perspektivischen Darstellung des Endabschnittes 80 gemäß Figur 3 ist zu entnehmen, dass der in seine Endposition auf Anschlag gefahrene Schlitten 20 eine Aufnahme 30 trägt, die am Schlitten 20 quer zur Längsrichtung des Führungssystems 6 in eine durch einen Pfeil angedeutete Vorschubrichtung 31 verschiebbar gelagert ist und die Reparaturauflage 22 aufnimmt. Zum Fixieren des Endabschnittes 80 im Bereich der Reparaturstelle sind im Ausführungsbeispiel sieben Saugnäpfe 10 vorgesehen, die paarweise (die oberen vier Saugnäpfe 10) bzw. in einer Dreiergruppe (die unteren drei Saugnäpfe 10) in Richtung des Doppelpfeiles 32 quer zur Längsrichtung des Führungssystems 6 vorzugsweise pneumatisch jeweils mit Pneumatikzylindern ausstellbar sind, von denen in der Figur nur der Pneumatikzylinder 33 des links dargestellten Saugnapfpaares erkennbar ist. Dies hat den Vorteil, dass die im Bereich des freien Endes befindlichen Saugnäpfe 10 beim Einführen des Führungssystems 6 in den schmalen Spalt in eine Stellung zurückgefahren werden können, die das Einführung in den schmalen Spalt, der sich in einer Tiefe von etwa 10 m unter Wasser befindet, erleichtert. Nach erfolgter Positionierung der Vorrichtung an der Seitenwand 12 können die Saugnäpfe 10 an die Seitenwand 12 angestellt und durch Beaufschlagen mit Unterdruck an ihr fixiert werden. Durch weiteres Ausfahren der Saugnäpfe 10 kann außerdem der für den Schlitten 20 verfügbare Abstand zur Seitenwand 12 vergrößert werden.

Die Saugnäpfe 10 sind relativ zum Führungssystem 6 in Längsrichtung mit einem begrenzten Spiel S in beide Richtungen (zum freien Ende hin und von diesem weg) federnd gelagert, so dass nach erfolgter Fixierung der Saugnäpfe 10 an der Seitenwand 12 durch Verschieben des Führungssystems 6 in Längsrichtung noch eine Nachjustage des Schlittens in diese Richtung möglich ist.

Zum Erleichtern des Führens der Vorrichtung an der Seitenwand 12 und des Einführens des Endabschnittes 80 in den Spalt ist dieser am distalen Ende mit Rollen oder Lagerkugeln 34 versehen, die entlang der Wand abrollen können.

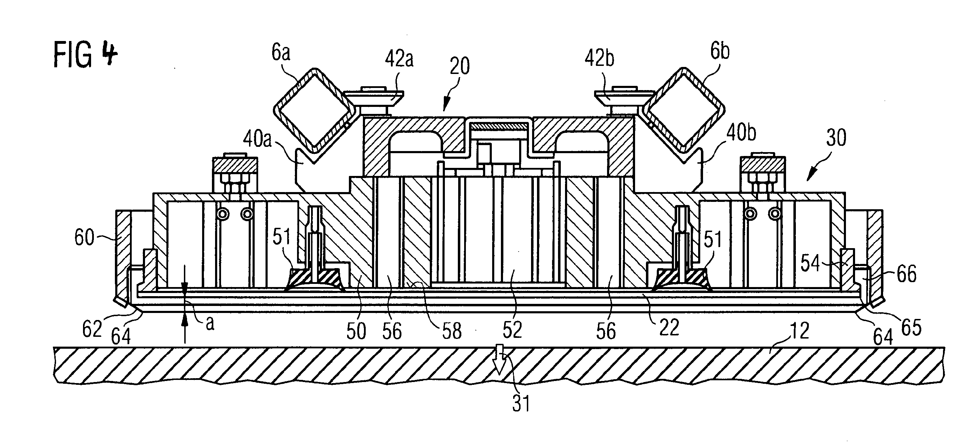

Gemäß Figur 4 haben die Führungsschienen 6a,b im Ausführungsbeispiel ein im Querschnitt quadratisches Profil. Der Schlitten 20 ist mit u-förmig geformten Kufen 40a,b versehen, deren Basen zueinander geneigt sind - im Beispiel 90° -, und mit denen der Schlitten 20 auf die Führungsschienen 6a,b aufgegleist ist. Ein Schenkel der u-förmigen Kufe 40a,b wird dabei jeweils durch eine konische Rolle 42a,b gebildet, die jeweils mit ihrer Konusfläche an einer Seitenfläche der Führungsschiene 6a bzw. b anliegt. Durch die gegeneinander geneigte Anordnung der Basen der u-förmigen Kufen 40a,b ist der Schlitten 20 quer zur Längsrichtung des Führungssystems 6 (in der Figur senkrecht zur Zeichenebene) auf den Führungsschienen 6a,b gesichert.

Die am Schlitten 20 angeordnete Aufnahme 30 umfasst einen Stempel 50, der mit einem Pneumatikaggregat 52 quer zur Längsrichtung des Führungssystems 6 in Richtung des Doppelpfeils 31 verschiebbar ist. Der Stempel 50 ist von einem axial relativ zu ihm verschiebbar gelagerten Tragrahmen 54 umgeben, auf dem die auf der dem Stempel abgewandten Flachseite mit einem in der Figur aus Gründen der Übersichtlichkeit nicht dargestellten Klebstoff versehene Reparaturauflage 22 mit ihrem Rand aufliegt.

Im Stempel 50 sind eine Mehrzahl von Saugnäpfen 51 ebenfalls axial federnd gelagert, mit denen die Reparaturauflage 22 in der Aufnahme 30 für den Transport fixiert ist. Zur Erhöhung der Stabilität sind außerdem Führungsbolzen 56 vorgesehen, die den Stempel 50 beim Betätigen des Pneumatikaggregates 52 führen.

Die Aufnahme 30 ist außerdem von einem axial zu ihr verschiebbar gelagerten Rahmen 60 umgeben, der eine sich in den vom Rahmen 60 umgebenen Innenraum erstreckende, beispielsweise aus einem abgewinkelten Federblech bestehende Lippe 62 umfasst, deren Innenrand 64 mit dem Außenrand 65 der Reparaturauflage 22 in Vorschubrichtung 31 fluchtet. Der Innenrand 64 steht in einer Ausgangsposition über die Reparaturauflage 22 um einen Abstand a vor und ist mit Hilfe von Pneumatikzylindern mit einer vorgegebenen Kraft gegenüber der Aufnahme 30 vorgespannt.

Ein Vorschub der Aufnahme 30 mit Hilfe des Pneumatikaggregates 52 bewirkt nun, dass zunächst die Lippe 62 die Seitenwand 12 berührt, bevor diese in Kontakt mit der mit dem Klebstoff versehenen Klebefläche der Reparaturauflage 22 kommt. Bei der weiteren Vorschubbewegung der Aufnahme 30 wird die Vorspannung des Rahmens 60 überwunden und die Klebefläche der Reparaturauflage 22 gelangt mit der Wandfläche der Seitenwand 12 in Berührung, wobei beim Erhöhen des Anpressdrucks durch die federnd gelagerten Saugnäpfe 51 ein zwischen der Rückseite der Reparaturauflage 22 und der Anpressfläche 58 der Aufnahme 30 befindlicher Spalt geschlossen wird, so dass ein flächiger Anpressdruck entsteht. Beim Anpressen der Reparaturauflage 22 an die Wandfläche wird der überschüssige und seitlich hervorquellende Klebstoff durch die Lippe 62 in einen zwischen dem Rahmen 60 und der Aufnahme 30 befindlichen und diesen umgebenden Auffangraum 66 abgestreift. Der Anpressdruck wird dann solange aufrecht erhalten, bis der Klebstoff ausgehärtet ist. Nach Aushärten des Klebstoffes werden die Saugnäpfe 51 belüftet, der Stempel 50 zurückgezogen und der Schlitten 20 mit Hilfe der Seilwinde nach oben gezogen.

Grundsätzlich ist es auch möglich, die in den Figuren 1 bis 4 näher erläuterten Vorrichtung in einer Weise zu modifizieren, die es auch ermöglicht, die an die Seitenwände angrenzenden Randbereiche der Bodenfläche zu reparieren, indem beispielsweise die Aufnahme für die Reparaturauflage schwenkbar zum Schlitten angeordnet wird, so dass die Reparaturauflage durch Vorschub der Aufnahme auch an geneigt oder senkrecht zur Längsrichtung des Führungssystems orientierte Flächen angestellt oder angepresst werden kann.

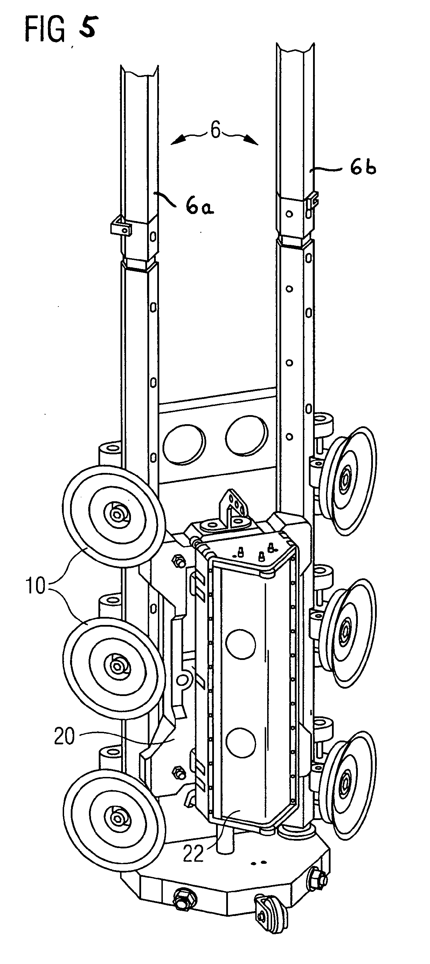

Die erfindungsgemäße Vorrichtung ist außerdem nicht nur zum Verkleben von planen Wandflächen geeignet, sondern mit an die jeweilige Kontur der Wand angepassten Reparaturauflagen auch entsprechend an anders geformte Wandflächen anpassbar. Ein solches Ausführungsbeispiel zeigt Figur 5. Hier ist zur Reparatur einer im Bereich einer Seitenkante eines Beckens befindlichen Schadstelle als Reparaturauflage 22 ein Winkelprofil mit dementsprechend konstruktiv veränderter Aufnahme sowie ein Führungssystem 6 mit entsprechend unter 90° zueinander ausgerichteten Saugnäpfen 10 vorgesehen, mit denen das Führungssystem an zwei aneinander grenzenden Seitenwänden fixiert werden kann. Auch in diesem Ausführungsbeispiel ist die Aufnahme quer zur Längsrichtung des Führungssystems 6 verschiebbar am Schlitten 20 gelagert. Dementsprechend können auch zylindrische Behälter oder Rohre mit entsprechend konstruktiv angepassten Aufnahmen, Führungssystemen und Reparaturauflagen repariert werden.

## Patentansprüche

1. Vorrichtung zur Reparatur einer Schadstelle (21) in einem unter Wasser befindlichen Wandbereich eines Behälters oder Beckens, insbesondere im Wandbereich eines Beckens einer Kernreaktoranlage, mit einem Führungssystem (6) und einem in Längsrichtung des Führungssystems (6) verfahrbaren und durch das Führungssystem (6) geführten Schlitten (20) und mit Mitteln, um das Führungssystem (6) entlang einer Seitenwand (12) beabstandet von dieser anzubringen und an dieser zu fixieren, wobei an dem Schlitten (20) eine quer zu dieser Längsrichtung verschiebbar gelagerte Aufnahme (30) für eine an den die Schadstelle (21) enthaltenden Wandbereich mit einer Klebefläche anlegbare Reparaturauflage (22) angeordnet ist.

2. Vorrichtung nach Anspruch 1, bei der der Schlitten (20) antriebslos ist und ausschließlich durch Wirkung der Schwerkraft in eine Endposition verfahrbar ist.

3. Vorrichtung nach einem der vorhergehenden Ansprüche, bei der das Führungssystem (6) aus lösbar miteinander verbundenen Abschnitten (8) zusammengesetzt ist.

4. Vorrichtung nach einem der vorhergehenden Ansprüche, bei der das Führungssystem (6) aus zwei zueinander parallelen Führungsschienen (6a,b) aufgebaut ist.

5. Vorrichtung nach einem der vorhergehenden Ansprüche, mit einer Mehrzahl von am Führungssystem (6) angeordneten, an eine Saugleitung angeschlossenen Saugnäpfen (10) zum Fixieren des Führungssystems (6) an der Seitenwand (12).

6. Vorrichtung nach Anspruch 5, bei der zumindest ein Saugnapf (10) quer zur Längsrichtung des Führungssystems (6) verschiebbar an diesem gelagert ist.

7. Vorrichtung nach einem der vorhergehenden Ansprüche, bei der die Reparaturauflage (22) in der Aufnahme (30) durch Erzeugen eines Unterdrucks auf einer der Klebefläche abgewandten Rückseite fixierbar ist.

8. Vorrichtung nach einem der vorhergehenden Ansprüche, bei der die Aufnahme (30) pneumatisch verschiebbar ist.

9. Vorrichtung nach einem der vorhergehenden Ansprüche, mit einem die Aufnahme (30) umgebenden und in Vorschubrichtung (31) der Aufnahme (30) verschiebbar mit einer Vorspannung relativ zu dieser gelagerten Rahmen (60) mit einer sich in den vom Rahmen (60) umgebenen Innenraum erstreckenden Lippe (62), deren Innenrand (64) mit dem Außenrand (66) der Reparaturauflage (22) in Vorschubrichtung (31) fluchtet und in einer Ausgangsposition über die Reparaturauflage (22) vorsteht.

10. Vorrichtung nach Anspruch 9, mit einem zwischen dem Rahmen (60) und der Aufnahme (30) befindlichen und diese umgebenden Auffangraum (66).

11. Vorrichtung nach Anspruch 9 oder 10, bei der die Lippe (62) aus einem Federblech besteht.

12. Vorrichtung nach einem der Ansprüche 9 bis 11, bei der der Rahmen (60) pneumatisch vorgespannt ist.

## Claims

1. Device for repairing a damaged area (21) in a submerged wall region of a container or tank, in particular in the wall region of a tank of a nuclear reactor plant, having a guide system (6) and a carriage (20) that can be moved in the longitudinal direction of the guide system (6) and is guided through the guide system (6), and having means for installing the guide system (6) along a side wall (12) at a distance from this and for fixing it to this, wherein a displaceably mounted holder (30) is arranged on the carriage (20) at right-angles to this longitudinal direction for a repair pad (22) that can be applied to the wall region containing the damaged area (21) with an adhesive surface.

2. Device according to claim 1, wherein the carriage (20) is unpowered and can be moved into an end position exclusively by the effect of gravity.

3. Device according to one of the preceding claims, wherein the guide system (6) is composed of releasably interconnected sections (8).

4. Device according to one of the preceding claims, wherein the guide system (6) is constructed from two mutually parallel guide rails (6a, b).

5. Device according to one of the preceding claims, having a plurality of suction cups (10) arranged on the guide system (6) connected to a suction line for fixing the guide system (6) to the side wall (12).

6. Device according to claim 5, wherein at least one suction cup (10) is mounted displaceably on this at right angles to the longitudinal direction of the guide system (6).

7. Device according to one of the preceding claims, wherein the repair pad (22) in the holder (30) can be fixed to a rear side facing away from the adhesive surface by generating an underpressure.

8. Device according to one of the preceding claims, wherein the holder (30) is pneumatically displaceable.

9. Device according to one of the preceding claims, having a mounted frame (60) that surrounds the holder (30) and that can be displaced in the feed direction (31) of the holder (30) with a pre-stress relative to this, having a lip (62) extending into the interior surrounded by the frame (60), the inner edge(64) of which is in alignment with the outer edge (66) of the repair pad (22) in the feed direction (31) and protrudes above the repair pad (22) in a starting position.

10. Device according to claim 9, having a collecting space (66) located between the frame (60) and the holder (30) and surrounding them.

11. Device according to claim 9 or 10, wherein the lip (62) consists of a spring steel sheet.

12. Device according to one of claims 9 to 11, wherein the frame (60) is pneumatically pre-stressed.

## Revendications

1. Dispositif destiné à la réparation d'une zone endommagée (21) d'une région d'une paroi se trouvant sous eau d'un conteneur ou d'une cuve, en particulier dans une région d'une paroi d'une cuve d'une installation de réacteur nucléaire, comportant un système de guidage (6) et un coulisseau (20) mobile dans le sens longitudinal du système de guidage (6) et guidé par le système de guidage (6) et des moyens pour mettre en place le système de guidage (6) le long d'une paroi latérale (12) à distance de celle-ci et le fixer à celle-ci, dans lequel est disposé sur le coulisseau (20) un élément de réception (30), monté mobile transversalement à cette direction longitudinale, pour un revêtement de réparation (22) pouvant être appliqué avec une surface adhésive sur la région de paroi contenant la zone endommagée (21).

2. Dispositif selon la revendication 1 selon lequel le coulisseau (20) est sans système d'entraînement et est exclusivement déplaçable dans une position de fin de course que par l'effet de la force de gravité.

3. Dispositif selon une quelconque des revendications précédentes selon lequel le système de guidage (6) est composé de sections (8) reliées entre elles de façon amovible.

4. Dispositif selon une quelconque des revendications précédentes selon lequel le système de guidage (6) est constitué de deux rails de guidage (6a, b) parallèles entre eux.

5. Dispositif selon une quelconque des revendications précédentes avec une pluralité de ventouses (10) raccordées à un conduit d'aspiration, disposées sur le système de guidage (6) destinées à la fixation du système de guidage (6) sur la paroi latérale (12).

6. Dispositif selon la revendication 5 selon lequel la au moins une ventouse (10) est montée mobile sur le système de guidage (6) transversalement au sens longitudinal de celui-ci.

7. Dispositif selon une quelconque des revendications précédentes selon lequel le revêtement de réparation (22) dans l'élément de réception (30) peut être fixé sur un face arrière opposée à la surface adhésive en produisant une dépression.

8. Dispositif selon une quelconque des revendications précédentes selon lequel l'élément de réception (30) peut être déplacé pneumatiquement.

9. Dispositif selon une quelconque des revendications précédentes avec un cadre (60) entourant l'élément de réception (30) et monté mobile dans la direction d'avance (31) de l'élément de réception (30) avec une prétension par rapport à celui-ci, avec une lèvre (62) s'étendant dans l'espace intérieur entouré par le cadre (60), dont le bord intérieur (64) est aligné dans la direction d'avance (31) avec le bord extérieur (66) du revêtement de réparation (22) et dépasse dans une position initiale au-dessus du revêtement de réparation (22).

10. Dispositif selon la revendication 9 avec un espace de réception (66) se trouvant entre le cadre (60) et l'élément de réception (30) et entourant ceux-ci.

11. Dispositif selon la revendication 9 ou 10 selon lequel la lèvre (62) est composée d'une tôle élastique.

12. Dispositif selon une quelconque des revendications 9 à 11 selon lequel le cadre (60) est préalablement serré pneumatiquement.
